# EUROPEAN PATENT SPECIFICATION

(11) **EP 4 403 807 B1**
(45) Date of publication and mention of the grant of the patent: **26.08.2026**
(21) Application number: 24152552.6
(22) Date of filing: 18.01.2024
(51) Int. Cl.: F16K 27/02, F16K 31/04, F16K 27/10, B21D 28/28, F16K 31/50, F16K 31/53

(54) **VALVE GEAR AND METHOD OF MANUFACTURING THE SAME**
VENTILTRIEB UND VERFAHREN ZUR HERSTELLUNG DAVON
COMMANDE DE SOUPAPE ET SON PROCÉDÉ DE FABRICATION

(30) Priority: 23.01.2023 JP 2023008173
(43) Date of publication of application: 24.07.2024
(73) Proprietor: Fujikoki Corporation, Tokyo 158-0082 (JP)
(72) Inventor: ISHIYAMA, Makoto, Tokyo, 1580082 (JP); SUZUKI, Syuji, Tokyo, 1580082 (JP); SUGANUMA, Takeshi, Tokyo, 1580082 (JP)
(74) Representative: Ter Meer Steinmeister & Partner

(56) References cited:
- CN-A- 101 737 545
- CN-A- 105 344 801
- US-A- 5 344 717
- US-A- 5 829 468

## Description

### TECHNICAL FIELD

The present invention relates to a valve gear and a method of manufacturing the same, and more particularly to a connection structure of a valve main body and a flow channel pipe by brazing.

### BACKGROUND ART

A valve gear which drives a valve body by a drive unit such as an electric motor (a motor) and an electromagnetic solenoid has been used in a refrigerant cycle device which is provided with a refrigerant circuit, for example, an air conditioner, and a freezing or refrigeration device.

The valve gear as mentioned above has a valve main body which is provided in an inner portion with a valve chamber including a valve seat, a valve body which moves forward and backward with respect to the valve seat, and flow channel pipes (a first flow channel pipe and a second flow channel pipe) which allow a fluid to flow into and out of the valve chamber, and can open and close a flow channel for the fluid formed between the first flow channel pipe and the second flow channel pipe or regulate a flow rate by moving the valve body forward and backward with a drive unit with respect to the valve seat.

Further, in the valve gear as mentioned above, the valve main body may be constructed by a pressed part which is advantageous in the aspect of a mass productivity and a manufacturing cost in comparison with a cut part. In this case, the valve main body has the following structure, for example.

A member (a tubular member) produced by press working and having a tubular shape is formed as a valve main body, and a drive unit is provided by closing one end of the tubular member with an airtight container. A valve seat is formed in the other ed of the tubular member, and a flow channel pipe is joined thereto. Further, a hole (this hole being called as "punched opening hole") punched by pressing is formed in a side wall of the tubular member, and is joined to the other flow channel pipe (this flow channel pipe being called as "first flow channel" and the flow channel joined to the other end of the tubular member being called as "second flow channel pipe") by inserting the other flow channel thereinto and brazing.

The following patent literature is provided as a literature which discloses a valve gear in which a valve main body is constructed by a pressed part.

CN 101 737 545 A discloses an electromagnetic valve and a processing method thereof. US 5,829,468 A discloses a valve device using pipes and a method for manufacturing it. US 5,344,717 A discloses a method for brazing and an apparatus therefore.

### CITATION LIST

### PATENT LITERATURE

Patent Literature 1: Japanese Unexamined Patent Publication No. 2019-19983

### SUMMARY OF INVENTION

### PROBLEM TO BE SOLVED BY INVENTION

In the meantime, in the valve gear as mentioned above, a sufficient brazing filler metal has not conventionally come around a joint portion of the flow channel pipe (the first flow channel pipe) to the side surface of the valve main body, and there has been a case that a good joint state in which a back fillet is formed has not been achieved. Then, the inventors of the present invention have considered this point, have found the following cause, and have found a solution to the cause.

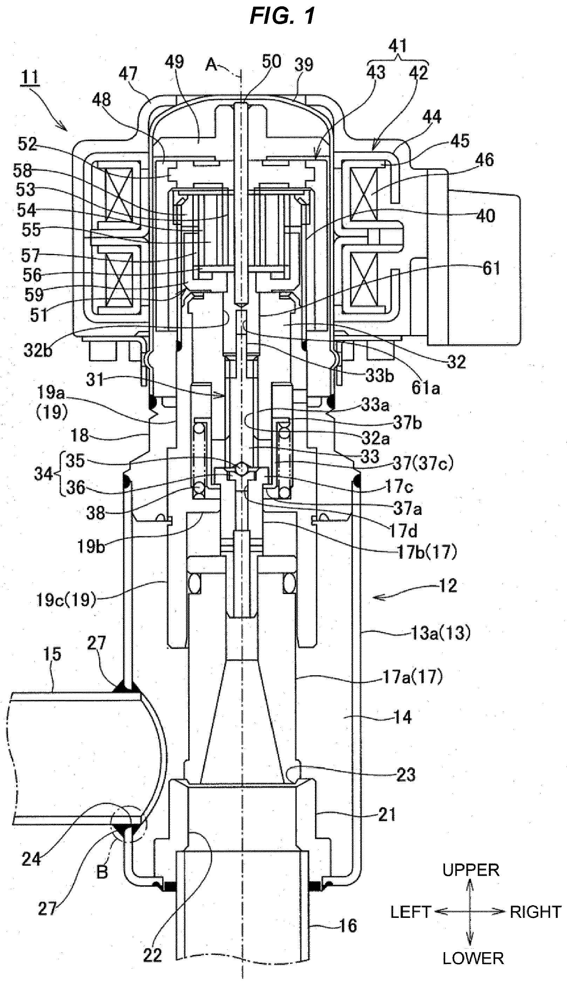

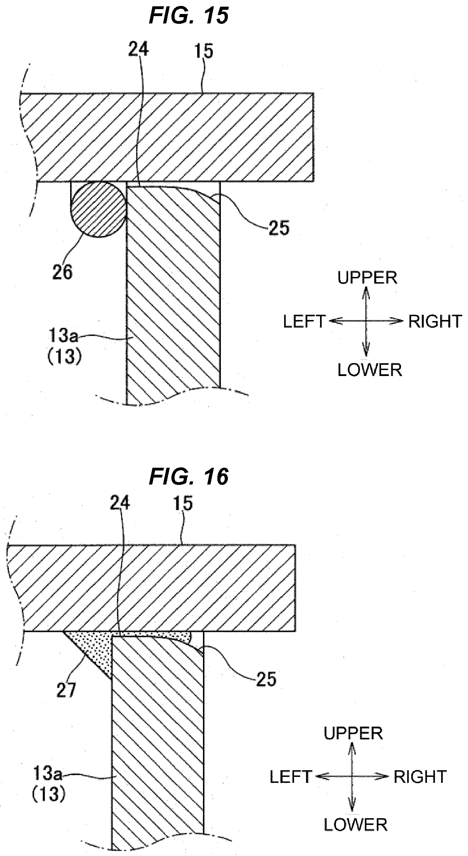

Figs. 15 and 16 are views showing a joint portion (corresponding to a portion B in Fig. 1) between a valve main body 13 and a first flow channel pipe 15. A punched opening hole 24 has been conventionally formed in a side wall 13a of the valve main body by punching the side wall 13a from an outer side of the valve main body 13 to an inner side thereof (from a left side to a right side in Figs. 15 and 16), installing a brazing filler metal 26 in the outer side of the valve main body 13 (refer to Fig. 15), and thereafter melting and joining the brazing filler metal 26 within a furnace (a brazing filler metal solidified after being melted is denoted by reference numeral 27).

However, a sagging (an enlarged diameter portion expanding so that an inner diameter side of the opening hole is enlarged) 25 is formed in an inner side of the valve main body when punching the side wall 13a (refer to Figs. 15 and 16), and a gap of a portion in which the sagging 25 is formed (a gap between an outer peripheral surface of the flow channel pipe 15 and an inner peripheral surface of the punched opening hole 24) may become larger than a clearance which is proper for brazing. This is thought to be a cause that an expansion of the melting brazing filler metal (penetration toward an inner side of the valve main body) is inhibited, and a good joint state can not be obtained.

Therefore, an object of the present invention is to improve a brazing filler metal coming around a portion between a flow channel pipe connected to a side surface of a valve main body and the valve main body, and to enhance a joint strength of the flow channel pipe without making the member thicker.

### MEANS FOR SOLVING PROBLEM

In order to solve the problem and achieve the object, a valve gear according to the present invention is characterized by the features of claim 1. Preferred embodiments of this valve gear are defined by the subclaims. This valve gear includes a valve main body which is provided in an inner portion with a valve chamber having a valve seat, a valve body which moves forward and backward with respect to the valve seat, a first flow channel pipe which is connected to the valve main body in such a manner as to communicate with the valve chamber, a second flow channel pipe which is connected to the valve main body in such a manner as to communicate with the valve chamber, and a drive unit which drives the valve body, in which the valve main body is constructed by a tubular member, and has an opening hole for connecting the first flow channel pipe in a side wall thereof, and the first flow channel pipe is fixed to the opening hole by brazing, wherein a gap between an inner peripheral surface of the opening hole and an outer peripheral surface of the first flow channel pipe is narrowed toward an inner portion side of the valve main body from an outer portion side of the valve main body.

In the valve gear, the gap between the inner peripheral surface of the opening hole and the outer peripheral surface of the first flow channel pipe is narrowed toward the inner portion side of the valve main body from the outer portion side of the valve main body as mentioned above. Therefore, in a case where a brazing filler metal is arranged in the outer portion side of the valve main body and is melted, the brazing filler metal melting along the gap which is narrowed little by little tends to penetrate toward the inner portion side of the valve main body. Thus, it is possible to improve the brazing filler metal coming around when joining the first flow channel pipe and enhance the joint strength of the flow channel pipe to the valve main body.

According to the present invention, the opening hole is a hole which is formed by punching the inner side wall from an inner portion side of the valve main body toward an outer portion side of the valve main body, such that a sagging is formed in an outer portion side of the valve main body.

**In** the valve gear, contrary to the conventional working method mentioned above, the opening hole is formed by performing a punching work from the inner portion side of the valve main body toward the outer portion side. According to this structure, the sagging generated when punching is formed in the outer portion side of the valve main body, so that the same gap as that of the first valve gear, that is, the gap narrowing toward the inner portion side of the valve main body from the outer portion side of the valve main body is formed between the inner peripheral surface of the opening hole and the outer peripheral surface of the first flow channel pipe. Therefore, the melting brazing filler metal penetrates to the inner portion side of the valve main body along the gap by arranging the brazing filler metal in the outer portion side of the valve main body and melting it. Thus, the joint strength of the first flow channel pipe to the valve main body can be enhanced.

Further, in an aspect of the present invention, the valve main body has a cylindrical shape, and a concave portion depressing in a thickness direction of the side wall is formed in each of an upper portion and a lower portion of the opening hole in the outer peripheral surface of the valve main body, on the assumption that one of the valve main body in an axial direction is "upper", and the other of the valve main body in the axial direction is "lower".

This is because of closing fitting the brazing filler metal (moving the brazing filler metal close) to the gap and more improving the brazing filler metal coming around. **In** more detail, in a case where the brazing filler metal is arranged like a ring on the outer peripheral surface of the first flow channel pipe and in such a manner as to come into contact with the outer peripheral surface of the cylindrical valve main body, right and left portions of the brazing filler metal are away from the outer peripheral surface of the valve main body to form a gap since the outer peripheral surface of the valve main body is curved. However, when the concave portion as mentioned above is formed, it is possible to make the gap (the gap between the outer peripheral surface of the valve main body and the brazing filler metal) small and move a whole of the brazing filler metal close to the outer peripheral surface of the valve main body to closely fit. Therefore, it is possible to more improve the brazing filler metal coming around. This point will be further mentioned with reference to the accompanying drawings in the description of embodiments mentioned later.

Further, a method of manufacturing a valve gear according to the present invention has the same feature as that of the valve gear according to the present invention mentioned above.

**In** particular, a method of manufacturing a valve gear is a method of manufacturing a valve gear including a valve main body which is provided in an inner portion with a valve chamber having a valve seat, a valve body which moves forward and backward with respect to the valve seat, a first flow channel pipe which is connected to the valve main body in such a manner as to communicate with the valve chamber, a second flow channel pipe which is connected to the valve main body in such a manner as to communicate with the valve chamber, and a drive unit which drives the valve body, in which the valve main body is constructed by a tubular member, and has an opening hole for connecting the first flow channel pipe in a side wall thereof, and the first flow channel pipe is fixed to the opening hole by brazing, wherein the method includes an opening hole piercing step of punching a side wall of the valve main body and forming the opening hole, and a first flow channel pipe connecting step of brazing and fixing the first flow channel pipe inserted into the opening hole to the opening hole after the opening hole piercing step, and wherein the opening hole piercing step is performed by punching the side wall of the valve main body from an inner portion side of the valve main body toward an outer portion side of the valve main body, such that a sagging formed in an outer portion side of the valve main body.

Further, in the manufacturing method mentioned above, it is preferable to employ the following aspect for the same reason as the one aspect of the present invention.

The valve main body has a cylindrical shape, the manufacturing method further includes a concave portion forming step of forming a concave portion depressing in a thickness direction of the side wall in each of an upper portion and a lower portion of the opening hole in the outer peripheral surface of the valve main body, before the first flow channel pipe connecting step, on the assumption that one of the valve main body in an axial direction is "upper", and the other of the valve main body in the axial direction is "lower", and the first flow channel pipe connecting step is performed by melting a ring-shaped brazing filler metal which is arranged in the first flow channel pipe in such a manner as to surround the first flow channel pipe and be fitted to the concave portion.

### EFFECT OF INVENTION

According to the present invention, it is possible to improve the brazing filler metal coming around between the flow channel pipe connected to the side surface of the valve main body and the valve main body, and it is possible to enhance the joint strength of the flow channel pipe.

The other objects, features and advantages of the present invention are clarified by the following description of embodiments according to the present invention described on the basis of the accompanying drawings. In each of the drawings, same reference numerals denote the same or corresponding portions.

### BRIEF DESCRIPTION OF DRAWINGS

Fig. 1 is a vertical cross sectional view showing a valve close state of an electrically operated valve according to a first embodiment of the present invention.
Fig. 2 is a vertical cross sectional view showing a valve open state of the electrically operated valve according to the first embodiment.
Fig. 3 is a vertical cross sectional view showing a step of manufacturing the electrically operated valve according to the first embodiment (a state in which a punched operating hole is formed in a valve main body).
Fig. 4 is a side elevational view showing the step of manufacturing the electrically operated valve according to the first embodiment (the state in which the punched operating hole is formed in the valve main body).
Fig. 5 is a vertical cross sectional view schematically showing the step of manufacturing the electrically operated valve according to the first embodiment (a state in which the valve main body is set to a press metal mold).
Fig. 6 is a vertical cross sectional view showing the step of manufacturing the electrically operated valve according to the first embodiment (a state in which the punched operating hole is formed in the valve main body within the press metal mold).
Fig. 7 is a side elevational view showing the step of manufacturing the electrically operated valve according to the first embodiment (a state in which a first flow channel pipe and a brazing filler metal are installed in the punched operating hole of the valve main body).
Fig. 8 is an enlarged vertical cross sectional view showing the step of manufacturing the electrically operated valve according to the first embodiment (a state in which the first flow channel pipe and the brazing filler metal are installed in the punched operating hole of the valve main body/a portion B1 in Fig. 7).
Fig. 9 is an enlarged vertical cross sectional view showing the step of manufacturing the electrically operated valve according to the first embodiment (a state in which the first flow channel pipe is brazed in the punched operating hole of the valve main body/a portion B in Fig. 1).
Fig. 10 is a vertical cross sectional view showing a step of manufacturing an electrically operated valve according to a second embodiment of the present invention (a state in which a punched operating hole is formed in a valve main body).
Fig. 11 is a side elevational view showing the step of manufacturing the electrically operated valve according to the second embodiment (the state in which the punched operating hole is formed in the valve main body).
Fig. 12 is a side elevational view showing the step of manufacturing the electrically operated valve according to the second embodiment (a state in which a first flow channel pipe and a brazing filler metal are installed in the punched operating hole of the valve main body).
Fig. 13 is an enlarged vertical cross sectional view showing the step of manufacturing the electrically operated valve according to the second embodiment (the state in which the first flow channel pipe and the brazing filler metal are installed in the punched operating hole of the valve main body) in the same manner as Fig. 8.
Fig. 14 is an enlarged vertical cross sectional view showing the step of manufacturing the electrically operated valve according to the second embodiment (the state in which the first flow channel pipe is brazed in the punched operating hole of the valve main body) in the same manner as Fig. 9.
Fig. 15 is an enlarged vertical cross sectional view showing a step of manufacturing a conventional electrically operated valve (a state in which a first flow channel pipe and a brazing filler metal are installed in a punched operating hole of a valve main body) in the same manner as Fig. 8.
Fig. 16 is an enlarged vertical cross sectional view showing the step of manufacturing the conventional electrically operated valve (a state in which the first flow channel pipe is brazed in the punched operating hole of the valve main body) in the same manner as Fig. 9.

### DESCRIPTION OF EMBODIMENTS

### [First Embodiment]

A description will be given of a valve gear according to a first embodiment of the present invention with reference to Figs. 1 to 9. Each of the drawings appropriately shows two-dimensional coordinates which represent a longitudinal direction, a lateral direction and a vertical direction and are orthogonal to each other, and the following description will be given on the basis of these directions. However, the valve gear according to the present invention and the present embodiment can be used in various directions, and each of the directions is provided for convenience. Thus, a structure of each of portions of the present invention is not restricted by these directions. Further, the terms "perpendicular" and "horizontal" may be used, a perpendicular direction coincides with the vertical direction, and a direction orthogonal to the perpendicular direction is a direction which includes the lateral direction and the longitudinal direction.

As shown in Figs. 1 to 9, a valve gear 11 according to the embodiment of the present invention is an electrically operated valve which is preferably used for regulating a flow rate of a refrigerant in a refrigerant cycle device, for example, a heat pump type cooling and heating system, and has a valve portion 12 which controls a refrigerant flow, an electric motor (a drive unit) 41 which drives the valve portion 12, a speed reduction mechanism 51 which decelerates the rotation of the electric motor 41, and a transmission mechanism (a feed screw mechanism) 31 which converts the rotation decelerated by the speed reduction mechanism 51 into a linear motion to transfer to the valve portion 12 (a valve body 17).

The valve portion 12 has a valve main body 13 which has a valve chamber 14 in an inner portion thereof and is constructed by a cylindrical pipe-like member being opened in an upper surface and a lower surface (having an upper surface opening and a lower surface opening), a first flow channel pipe 15 which passes through a side wall 13a of the valve main body 13 and is joined to the valve main body 13 so as to communicate with the valve chamber 14, a valve seat member 21 which has a center hole 22 passing through in a vertical direction, has a valve seat 23 in an upper surface (an upper edge portion of the center hole 22) and is joined to a lower surface of the valve main body 13 so as to close the lower surface opening of the valve main body 13, a valve body 17 which opens and closes the center hole 22 of the valve seat member 21 by moving forward and backward (moving up and down) with respect to the valve seat 23, a valve body support member 19 which supports the valve body 17 within the valve chamber 14 so as to be movable up and down, a second flow channel pipe 16 which is fixed to the valve seat member 21 so as to communicate with the valve chamber 14 via the center hole 22, and a connection member 18 which closes the upper surface opening of the valve main body 13 and is joined to the upper surface of the valve main body 13 so as to allow the electric motor 41 to be installed to the valve portion 12.

The connection of the first flow channel pipe 15 to the valve main body 13 is achieved as follows.

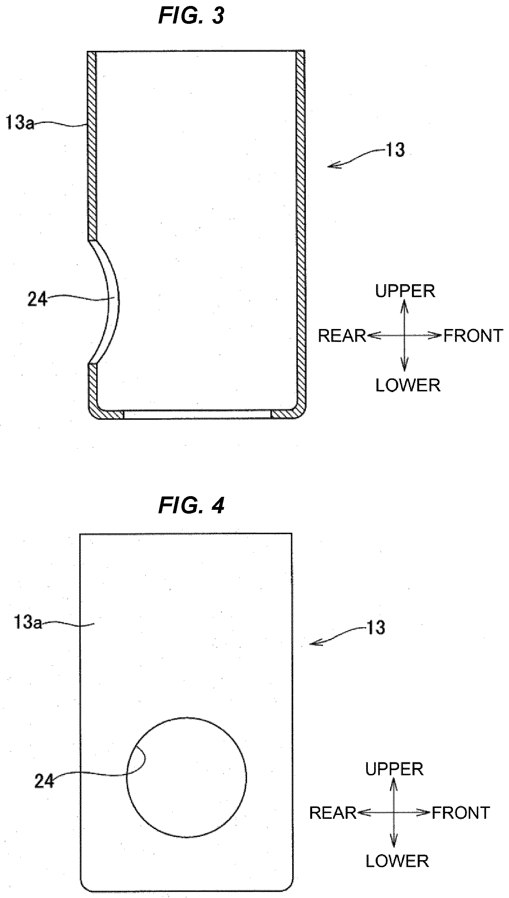

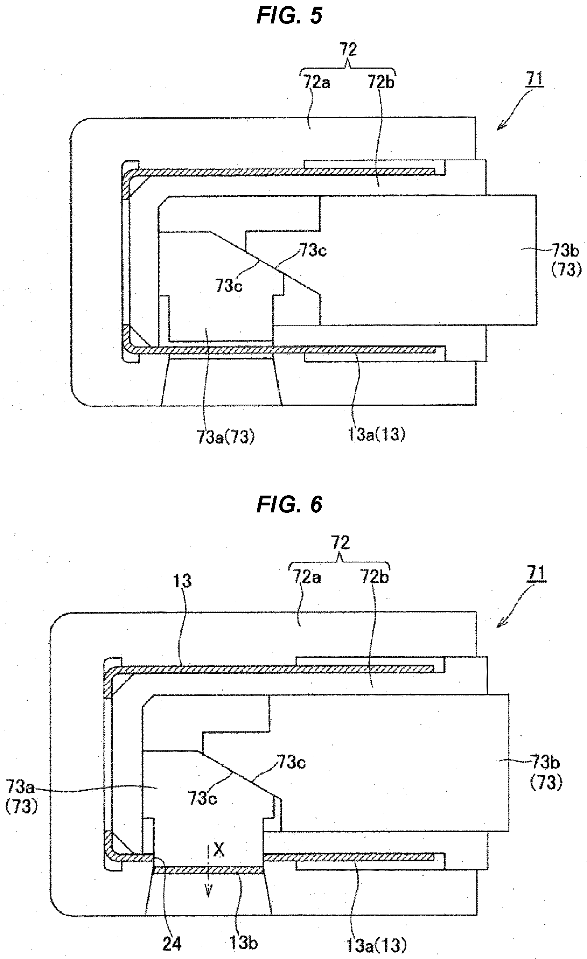

First of all, as shown in Figs. 3 and 4, a punched opening hole 24 is disposed in the side wall 13a of the valve main body 13. For this purpose, the valve main body 13 is arranged, for example, in an inner portion of a metal mold 71 as shown in Fig. 5. The metal mold 71 has a die (a female die) 72 which holds the valve main body 13 therebetween, and a punch (a male die) 73 which punches the side wall 13a of the valve main body 13 to form an opening hole 24. The die 72 is constructed by an external die 72a which supports the valve main body 13 from an outer surface side, and an internal die 72b which supports the valve main body 13 from an inner surface side, and the punch 73 is disposed in the internal die 72b. The punch 73 is constructed by a punch main body 73a which moves forward in a radial direction of the valve main body 13 from a center portion of the valve main body 13 toward an inner surface of the side wall 13a, and an operating punch 73b which slides in an axial direction of the valve main body 13 (the internal die 72b) along an inner peripheral surface of the internal die 72b and moves the punch main body 73a forward.

Further, the punch main body 73a and the operating punch 73b are in contact with each other via taper surfaces 73c which are formed respectively in both of the punch main body 73a and the operating punch 73b. When the operating punch 73b is moved in the axial direction of the valve main body 13 (toward a lower surface opening of the valve main body 13) as shown in Fig. 6, the punch main body 73a moves in a direction which is orthogonal to an axis of the valve main body 13 (the operating punch 73b), that is, a radial direction of the valve main body 13, since the taper surfaces 73c are in contact with each other. The side wall 13a of the valve main body 13 is punched from an inner side (refer to an arrow X in Fig. 6/ a part of the punched side wall is denoted by reference sign 13b) by the metal mold 71, and the punched opening hole 24 is formed in the valve main body 13.

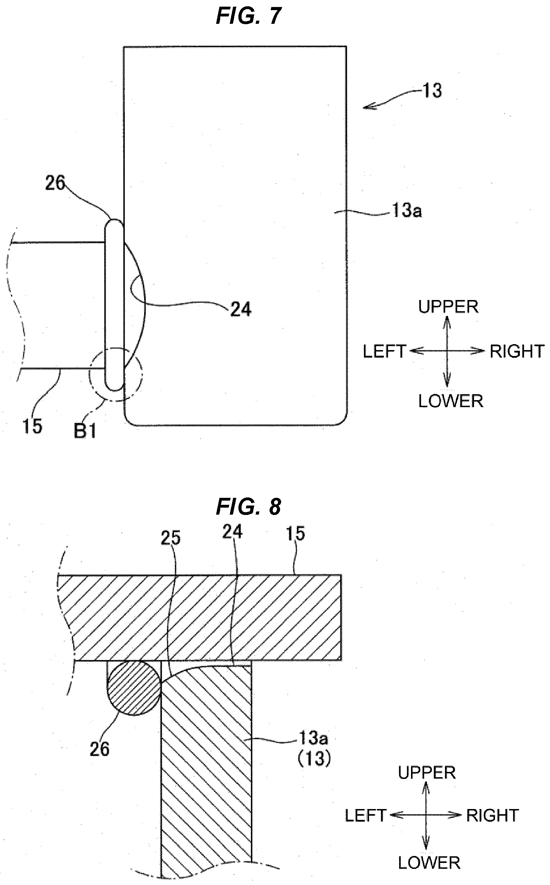

Next, the first flow channel 15 and a brazing filler metal 26 are arranged in the punched opening hole 24 as shown in Fig. 7. In more detail, a leading end portion of the first flow channel pipe 15 is inserted into the punched opening hole 24, and the ring-shaped brazing filler metal 26 is arranged around the punched opening hole 24 in an outer surface side of the valve main body 13 in such a manner as to surround the first flow channel pipe 15. Fig. 8 is a cross sectional view showing a part (a portion indicated by reference sign B1) of Fig. 7 in an enlarged manner. However, the punched opening hole 24 is formed by punching the side wall 13a from the inner portion side of the valve main body 13 in the present embodiment. Therefore, a sagging 25 is formed in an outer portion side of the valve main body 13 contrary to the conventional structure (Figs. 15 and 16) as shown in Fig. 8, and a gap between an inner peripheral surface of the punched opening hole 24 and an outer peripheral surface of the first flow channel pipe 15 is narrowed little by little from the outer portion side of the valve main body 13 toward the inner portion side.

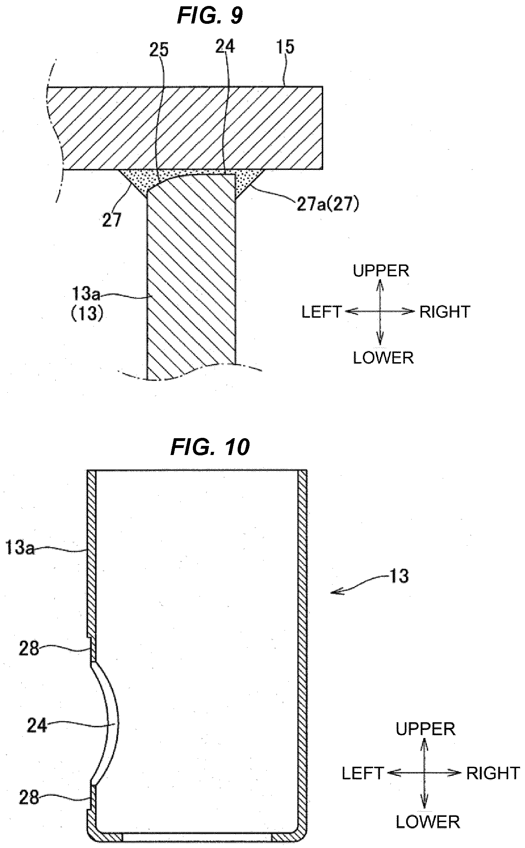

Further, the valve main body 13 in which the first flow channel pipe 15 and the brazing filler metal 26 are arranged is put in a furnace, and the brazing filler metal 26 is melted. The melted brazing filler metal 26 tends to penetrate to the back of the gap (that is, the inner portion side of the valve main body 13) due to a shape of the gap narrowing little by little, and it is possible to achieve a good joint state in which a back fillet 27a is formed in the inner portion side of the valve main body 13 as shown in Fig. 9 (the brazing filler metal solidified after melting is denoted by reference numeral 27).

Specific structures of the other portions of the valve main body 13 and the valve portion 12, the electric motor 41, the speed reduction mechanism 51 and the transmission mechanism 31 may be variously changed, and are not limited to any particular structures, but one example thereof will be mentioned below.

The electric motor 41 driving the valve body 17 employs a stepping motor in the present embodiment. The stepping motor is constructed by a stator 42 and a rotor 43. The stator 42 is installed in an outer side (an outer periphery) of a can (a sealed container) 39. The can 39 has a cylindrical shape which is open in a bottom side and is closed in the top surface, and is fixed to the connection member 18 so as to cover the upper surface of the connection member 18. The rotor 43 is rotatably installed in an inner side (an inner periphery) of the can 39.

The stator 42 includes a yoke 44, a coil 46 which is formed by winding a wire to a bobbin 45, and a resin mold cover 47 which covers the yoke 44 and the coil 46. On the other hand, the rotor 43 is constructed by integrally connecting a cylindrical rotor member 48 which is produced by a magnetic material, and a sun gear member 52 which is produced by a resin material. A shaft 50 is inserted into a center portion of the sun gear member 52, and an upper portion of the shaft 50 is supported by a support member 49 which is arranged in an inner side of a top portion of the can 39.

A sun gear 53 of the sun gear member 52 engages with a plurality of planetary gears 54 which are rotatably supported to a shaft 55 disposed in a carrier 56 mounted on a bottom surface of an output gear 59. An upper portion of the planetary gear 54 engages with an annular ring gear (an internal fixed gear) 58 which is attached to an upper portion of a cylindrical member 40 fixed to an upper portion of a valve body support member 19, and a lower portion of the planetary gear 54 engages with an internal tooth gear 57 of the annular output gear 59. The number of teeth of the ring gear 58 is slightly different from the number of teeth of the internal tooth gear 57 of the output gear 59. Thus, the number of rotation of the sun gear 53 is decelerated with a great deceleration ratio and is transmitted to the output gear 59. The gear mechanisms (the sun gear 53, the planetary gear 54, the ring gear 58 and the output gear 59) construct the speed reduction mechanism (a paradox planetary gear speed reduction mechanism) 51 which decelerates the rotation of the electric motor 41 mentioned above.

The connection member 18 joined to the upper surface portion of the valve main body 13 is a ring-shaped member having a through hole in a center portion thereof, and the valve body support member 19 supporting the valve body 17 is fitted to and inserted into the through hole. The valve body support member 19 has a valve body support member main body 19a which is bottomed and not covered and is formed into a cylindrical container, and a cylinder portion 19c which falls perpendicularly downward from a lower surface of a bottom plate portion 19b of the valve body support member main body 19a and is formed into a cylindrical shape. The valve body support member main body 19a supports a valve body upper portion 17b passing through the bottom plate portion 19b so as to be slidable in a vertical direction. The cylinder portion 19c supports a valve body lower portion 17a (an upper portion of the valve body lower portion 17a) so as to be slidable in the vertical direction.

A tubular bearing member 32 is fitted to and inserted into the upper portion of the valve body support member 19, and the bearing member 32 is fixed by caulking an upper surface portion of the valve body support member 19. The output gear 59 is in slidably contact with an upper surface of the bearing member 32. Further, an upper portion of a stepped cylindrical output shaft 61 is pressed into the center of a bottom portion of the output gear 59, and a lower portion of the output shaft 61 is rotatably inserted into an insertion hole 32b which is formed at the center portion of the upper surface of the bearing member 32. Further, a lower end portion of the shaft 50 is rotatably fitted to the upper portion of the output shaft 61.

A female screw portion 32a is formed in a lower portion of a center portion of the bearing member 32, and a male screw portion 33a formed on an outer peripheral surface of the screw drive member 33 threadably engages with the female screw portion 32a. The feed screw mechanism 31 constructed by the bearing member 32 (the female screw portion 32a) and the screw drive member 33 (the male screw portion 33a) constructs a transmission mechanism which converts a rotating motion supplied from the electric motor 41 via the speed reduction mechanism 51 into a liner motion in the vertical direction to transfer to the valve body 17.

Here, the output gear 59 rotationally moves at a fixed position in the vertical direction without moving up and down, and the rotating motion of the output gear 59 is transferred to the screw drive member 33 side by inserting a tabular plate-like portion 33b disposed in an upper end portion of the screw drive member 33 into a slit-like fitting groove 61a disposed in a lower end portion of the output shaft 61 connected to the output gear 59. The plate-like portion 33b disposed in the screw drive member 33 slides in the vertical direction within the fitting groove 61a of the output shaft 61. Thus, when the output gear 59 (the rotor 43) rotates, the screw drive member 33 linearly moves in the vertical direction by the feed screw mechanism 31 in spite of no movement of the output gear 59 and the output shaft 61 in the vertical direction.

The linear motion of the screw drive member 33 is transferred to the valve body 17 via a ball-like joint 34 which is constructed by a ball 35, and a ball receiving seat 36 fitted to a fitting hole 17d disposed at the center of an upper surface of the valve body upper portion. The valve body 17 is constructed by a valve body upper portion 17b which passes through the bottom plate portion 19b of the valve body support member main body 19, and a valve body lower portion 17a which is arranged within the cylinder portion 19c and within the valve chamber 14. The valve body upper portion 17b passes through the bottom plate portion 19b of the valve body support member main body 19a, passes through a bottom plate portion 37a of a spring receiving member 37 which is arranged in a bottom surface of an inner portion of the valve body support member main body 19a, and has a head portion 17c which is diameter enlarged like a flange in an upper end thereof.

The spring receiving member 37 has a bottom plate portion 37a which allows the valve body upper portion 17b to pass through and comes into contact with a lower surface peripheral edge portion of the head portion 17c from the blow, a tubular peripheral wall portion 37c which forms a ring-like gap with respect to an inner peripheral surface of the valve body support member main body 19a, and a flange portion 37b which horizontally expands outward from an upper end of the peripheral wall portion 37c. Further, a compression coil spring 38 is disposed between the flange portion 37b of the spring receiving member 37 and the bottom plate portion 19b of the valve body support member main body 19a. The compression coil spring 38 always biases the valve body 17 (the head portion 17c of the valve body upper portion 17b) upward via the bottom plate portion 37a of the spring receiving member 37. Thus, even in a case where the screw drive member 33 moves upward, the screw drive member 33 and the valve body 17 being in contact with each other via the ball-like joint 34 are not separated, and the screw drive member 33 and the valve body 17 are integrated in the vertical direction.

The screw drive member 33 in the drive portion side rotationally slides around a center axis A via the ball 35 with respect to the valve body 17, and the rotation of the screw drive member 33 is not transferred to the valve body 17. In the electrically drive member 33 according to the present embodiment, each of the members such as the valve main body 13, the valve body support member 19, the valve body 17 and the valve seat member 21 (the valve seat 23) is arranged coaxially, and the center axis A thereof coincides with the rotation axis.

A description will be given of a motion of the electrically operated valve 11 according to the present embodiment as follows.

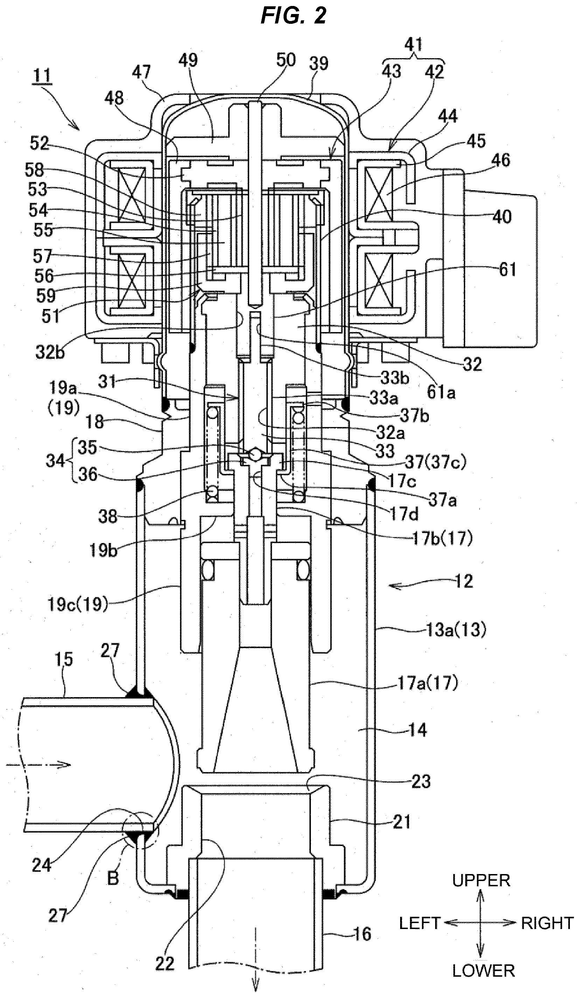

When an electric current is supplied to the stator 42 (the coil 46) in such a manner that the rotor 43 turns in one direction from a valve close state shown in Fig. 1, the rotation of the rotor 43 is converted into the linear motion by the feed screw mechanism 31, and the screw drive member 33 is pulled upward. As a result, the valve body 17 (the head portion 17c of the valve body upper portion 17b) pressed against the lower surface of the screw drive member 33 via the ball-like joint 34 on the basis of the biasing force of the compression coil spring 38 is pulled upward, the valve body 17 (the valve body lower portion 17a) is separated from the valve seat 23, and the refrigerant flowing into from the first flow channel pipe 15 flows out of the second flow channel pipe 16 through the valve chamber 14 and the center hole 22 of the valve seat member 21 (refer to an arrow in Fig. 2). A passing quantity of the refrigerant (a refrigerant flow rate) in the valve open state can be regulated by an amount of rotation of the rotor 43 (a distance between the valve seat 23 and the valve body 17).

On the other hand, when the electric current is supplied to the stator 42 (the coil 46) in such a manner that the rotor 43 turns in a direction opposite to the one direction from the valve open state, the rotation of the rotor 43 is converted into the linear motion by the feed screw mechanism 31, and the screw drive member 33 moves downward. As a result of this downward motion, the valve body 17 moves downward, and a flow channel between the first flow channel pipe 15 and the second flow channel pipe 16 is cut off when the valve body 17 (the valve body lower portion 17a) comes into contact with the valve seat 23, thereby coming to the valve close state (refer to Fig. 1).

In the description of the motion mentioned above, the refrigerant is flowed into from the first flow channel pipe 15 and the refrigerant is flowed out of the second flow channel pipe 16. However, conversely, the electrically operated valve 11 can be used in such a manner that the refrigerant is flowed into from the second flow channel pipe 16 and the refrigerant is flowed out of the first flow channel pipe 15.

### [Second Embodiment]

A description will be given of a valve gear (an electrically operated valve) according to a second embodiment of the present invention with reference to Figs. 10 to 14. The electrically operated valve according to the present embodiment is different from the first embodiment only in the valve main body 13 (particularly a peripheral portion of the punched opening hole 24), and has the same structure as the electrically operated valve 11 according to the first embodiment in the other portions. Therefore, same reference numerals are attached to the same structures, a redundant description will be omitted, and the description will be given mainly of different points. Further, Figs. 10 to 14 show a joint portion with the valve main body 13 and the first flow channel pipe 15 in the electrically operated valve according to the present embodiment respectively in the same manner as those of Figs. 3, 4 and 7 to 9.

In the electrically operated valve according to the present embodiment, the punched opening hole 24 to which the first flow channel pipe 15 is connected is formed by being punched from the inner portion side of the valve main body 13, and the first flow channel pipe 15 is inserted and brazed to be fixed to the punched opening hole 24, in the same manner as the first embodiment. However, in the present embodiment, a concave portion 28 is formed in each of an upper portion and a lower portion of the punched opening hole 24 in an outer portion side of the valve main body as shown in Figs. 10 to 14, and the brazing filler metal 26 is arranged in such a manner as to drop in the concave portion 28 (in such a manner that the upper portion and the lower portion of the brazing filler metal 26 are accommodated in the concave portion 28). The punched opening hole 24 is formed by being punched from the inner portion side of the valve main body 13 in the same manner as the first embodiment. Therefore, the sagging 25 is formed in the outer portion side of the valve main body 13, thereby forming the same shape as the first embodiment (the shape that the gap between the inner peripheral surface of the punched opening hole 24 and the outer peripheral surface of the fist flow channel pipe 15 is narrowed little by little toward the inner portion side from the outer portion side of the valve main body).

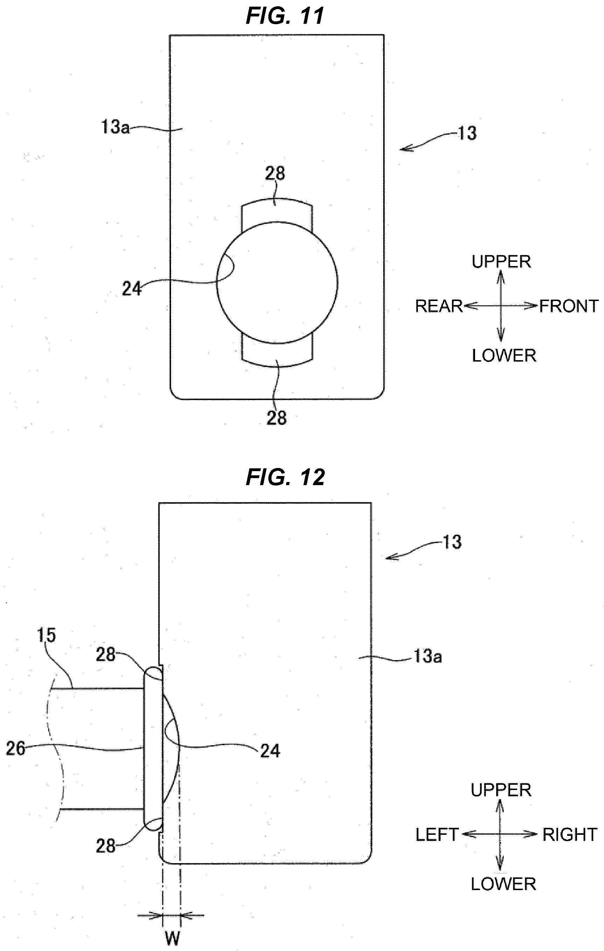

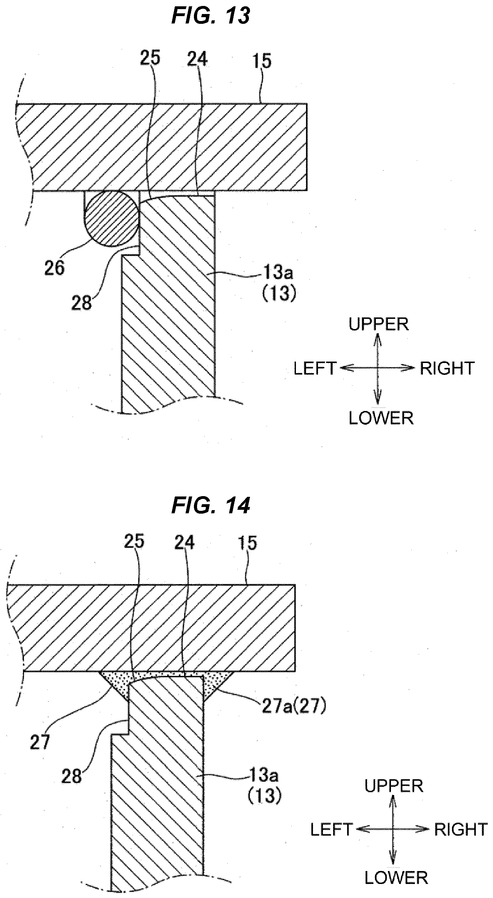

In the present embodiment, the brazing filler metal 26 arranged in such a manner that the upper portion and the lower portion are accommodated within the concave portion 28 comes close to and is closely fitted to the outer peripheral surface of the valve main body 13 (the outer peripheral edge portion of the punched opening hole 24) as a whole of the brazing filler metal 26 in comparison with the first embodiment. In particular, a distance W (refer to Fig. 12) between both edge portions (an edge portion in a front side and an edge portion in a rear side) of the punched opening hole 24 in a horizontal direction and the brazing filler metal 26 becomes smaller, the brazing filler metal can uniformly come around an entire periphery of an outer peripheral surface of the first flow channel pipe 15 (in other words, an entire periphery of an inner peripheral surface of the punched opening hole 24), and it is possible to achieve a good joint state in which the uniform back fillet 27a (refer to Fig. 14) over the entire periphery of the punched opening hole 24 is formed in the inner portion side of the valve main body 13. Further, the formation of the back fillet 27a contributes to an improvement of corrosion resistance as well as securance of joint strength, and can reduce a risk of refrigerant leakage.

The description is given above of the embodiments according to the present invention. However, it is apparent for a person skilled in the art that the present invention is not limited to them, and can be variously changed within the scope of claims.

For example, in the embodiment mentioned above, the electrically operated valve using the electric motor for the drive unit driving the valve body is constructed. However, it is possible to construct a solenoid valve using an electromagnetic drive unit such as an electromagnetic solenoid for the drive unit, or a regulator valve or an expansion valve using a mechanical drive unit having a diaphragm or a bellows on the basis of the present invention. Further, in the present invention, the first flow channel pipe may be an inflow pipe for flowing the fluid into the valve chamber, and the second flow channel pipe may be an outflow pipe for flowing the fluid out of the valve chamber, or conversely, the first flow channel pipe may be the outflow pipe and the second flow channel pipe may be the inflow pipe.

Further, the feature of the present invention exists in the connection structure between the valve main body constructed by the tubular member and the flow channel pipe fixed to the side surface of the valve main body by brazing, and the connecting method (manufacturing method) thereof. Therefore, the structures of the other portions of the valve gear and the manufacturing method thereof may employ other various structures and methods than the embodiments. Further, in the embodiments mentioned above, the opening hole (the punched opening hole 24) is formed in such a manner that the gap is narrowed toward the inner portion side by punching the opening hole of the side wall 13a. However, the same effects can be obtained for the brazing filler metal coming around even by an opening hole which is formed into the same shape by cutting work.

### REFERENCE SIGNS LIST

A center axis of valve main body, valve body support member, valve body and valve seat member, and rotation axis of rotor
11 electrically operated valve
12 valve portion
13 valve main body
13a side wall of valve main body
13b part of side wall (punched portion)
14 valve chamber
15 first flow channel pipe
16 second flow channel pipe
17 valve body
17a valve body lower portion
17b valve body upper portion
17c head portion
17d fitting hole
18 connection member
19 valve body support member
19a valve body support member main body
19b bottom plate portion
19c cylinder portion
21 valve seat member
22 center hole
23 valve seat
24 punched opening hole
25 sagging
26 brazing filler metal
27 brazing filler metal solidifying after melting
27a back fillet
28 concave portion
31 transmission mechanism (feed screw mechanism)
32 bearing member
32a female screw portion
32b insertion hole
33 screw drive member
33a male screw portion
33b plate-like portion
34 ball-like joint
35 ball
36 ball receiving seat
37 spring receiving member
37a bottom plate portion
37b flange portion
37c peripheral wall portion
38 compression coil spring
39 can
40 cylindrical member
41 electric motor (drive unit)
42 stator
43 rotor
44 yoke
45 bobbin
46 coil
47 resin mold cover
48 rotor member
49 support member
50 shaft
51 speed reduction mechanism
52 sun gear member
53 sun gear
54 planetary gear
55 shaft
56 carrier
57 internal tooth gear
58 ring gear
59 output gear
61 output shaft
61a fitting groove
71 metal mold
72 die
72a external die
72b internal die
73 punch
73a punch main body
73b operating punch
73c taper surface

## Claims

1. A valve gear comprising:
a valve main body (13) which is provided in an inner portion with a valve chamber (14) having a valve seat (23);
a valve body (17) which moves forward and backward with respect to the valve seat (23);
a first flow channel pipe (15) which is connected to the valve main body (13) in such a manner as to communicate with the valve chamber (14);
a second flow channel pipe (16) which is connected to the valve main body (13) in such a manner as to communicate with the valve chamber (14); and
a drive unit which drives the valve body (17),
in which the valve main body (13) is constructed by a tubular member, and has an opening hole (24) for connecting the first flow channel pipe (15) in a side wall (13a) thereof, and
the first flow channel pipe (15) is fixed to the opening hole (24) by brazing,
wherein a gap between an inner peripheral surface of the opening hole (24) and an outer peripheral surface of the first flow channel pipe (15) is narrowed toward an inner portion side of the valve main body (13) from an outer portion side of the valve main body (13),
**characterized in that** the opening hole (24) is a hole which is formed by punching the side wall (13a) from an inner portion side of the valve main body (13) toward an outer portion side of the valve main body (13) such that a sagging (25) is formed in an outer portion side of the valve main body (13).

2. The valve gear according to claim 1, wherein the valve main body (13) has a cylindrical shape, and
wherein a concave portion (28) depressing in a thickness direction of the side wall (13a) is formed in each of an upper portion and a lower portion of the opening hole (24) in the outer peripheral surface of the valve main body (13), on the assumption that one of the valve main body (13) in an axial direction is "upper", and the other of the valve main body (13) in the axial direction is "lower".

3. A method of manufacturing a valve gear, the valve gear comprising:
a valve main body (13) which is provided in an inner portion with a valve chamber (14) having a valve seat (23);
a valve body (17) which moves forward and backward with respect to the valve seat (23);
a first flow channel pipe (15) which is connected to the valve main body (13) in such a manner as to communicate with the valve chamber (14);
a second flow channel pipe (16) which is connected to the valve main body (13) in such a manner as to communicate with the valve chamber (14); and
a drive unit which drives the valve body (17),
in which the valve main body (13) is constructed by a tubular member, and has an opening hole (24) for connecting the first flow channel pipe (15) in a side wall (13a) thereof, and
the first flow channel pipe (15) is fixed to the opening hole (24) by brazing,
wherein the method comprises:
an opening hole piercing step of punching a side wall (13a) of the valve main body (13) and forming the opening hole (24); and
a first flow channel pipe (15) connecting step of brazing and fixing the first flow channel pipe (15) inserted into the opening hole (24) to the opening hole (24) after the opening hole piercing step, and
wherein the opening hole piercing step is performed by punching the side wall (13a) of the valve main body (13) from an inner portion side of the valve main body toward (13) an outer portion side of the valve main body (13) such that a sagging (25) is formed in an outer portion side of the valve main body (13).

4. The method of manufacturing the valve gear according to claim 3, wherein the valve main body (13) has a cylindrical shape,
the manufacturing method further comprises:
a concave portion forming step of forming a concave portion (28) depressing in a thickness direction of the side wall (13a) in each of an upper portion and a lower portion of the opening hole (24) in the outer peripheral surface of the valve main body (13), before the first flow channel pipe connecting step, on the assumption that one of the valve main body (13) in an axial direction is "upper", and the other of the valve main body (13) in the axial direction is "lower", and
wherein the first flow channel pipe connecting step is performed by melting a ring-shaped brazing filler metal which is arranged in the first flow channel pipe (15) in such a manner as to surround the first flow channel pipe (15) and be fitted to the concave portion (28).

## Patentansprüche

1. Ventiltrieb, umfassend:
einen Ventilhauptkörper (13), der in einem inneren Abschnitt mit einer Ventilkammer (14) versehen ist, die einen Ventilsitz (23) aufweist;
einen Ventilkörper (17), der sich in Bezug auf den Ventilsitz (23) vorwärts und rückwärts bewegt;
ein erstes Strömungskanalrohr (15), das mit dem Ventilhauptkörper (13) derart verbunden ist, dass es mit der Ventilkammer (14) in Verbindung steht;
ein zweites Strömungskanalrohr (16), das mit dem Ventilhauptkörper (13) derart verbunden ist, dass es mit der Ventilkammer (14) in Verbindung steht; und
eine Antriebseinheit, die den Ventilkörper (17) antreibt,
wobei der Ventilhauptkörper (13) durch ein rohrförmiges Element aufgebaut ist und ein Öffnungsloch (24) zum Verbinden des ersten Strömungskanalrohrs (15) in einer Seitenwand (13a) desselben aufweist, und
das erste Strömungskanalrohr (15) durch Hartlöten an dem Öffnungsloch (24) befestigt ist,
wobei ein Spalt zwischen einer Innenumfangsfläche des Öffnungslochs (24) und einer Außenumfangsfläche des ersten Strömungskanalrohrs (15) von einer Außenbereichsseite des Ventilhauptkörpers (13) zu einer Innenbereichsseite des Ventilhauptkörpers (13) hin verengt ist,
**dadurch gekennzeichnet, dass** das Öffnungsloch (24) ein Loch ist, das durch Stanzen der Seitenwand (13a) von einer Innenbereichsseite des Ventilhauptkörpers (13) zu einer Außenbereichsseite des Ventilhauptkörpers (13) derart ausgebildet ist, dass eine Durchbiegung (25) in einer Außenbereichsseite des Ventilhauptkörpers (13) ausgebildet ist.

2. Ventiltrieb nach Anspruch 1, wobei der Ventilhauptkörper (13) eine zylindrische Form aufweist, und
wobei ein konkaver Abschnitt (28), der in einer Dickenrichtung der Seitenwand (13a) vertieft ist, in jedem von einem oberen Abschnitt und einem unteren Abschnitt des Öffnungslochs (24) in der Außenumfangsfläche des Ventilhauptkörpers (13) ausgebildet ist, unter der Annahme, dass einer des Ventilhauptkörpers (13) in einer axialen Richtung "oben" ist und der andere des Ventilhauptkörpers (13) in der axialen Richtung "unten" ist.

3. Verfahren zum Herstellen eines Ventiltriebs, wobei der Ventiltrieb umfasst:
einen Ventilhauptkörper (13), der in einem inneren Abschnitt mit einer Ventilkammer (14) versehen ist, die einen Ventilsitz (23) aufweist;
einen Ventilkörper (17), der sich in Bezug auf den Ventilsitz (23) vorwärts und rückwärts bewegt;
ein erstes Strömungskanalrohr (15), das mit dem Ventilhauptkörper (13) derart verbunden ist, dass es mit der Ventilkammer (14) in Verbindung steht;
ein zweites Strömungskanalrohr (16), das mit dem Ventilhauptkörper (13) derart verbunden ist, dass es mit der Ventilkammer (14) in Verbindung steht; und
eine Antriebseinheit, die den Ventilkörper (17) antreibt,
wobei der Ventilhauptkörper (13) durch ein rohrförmiges Element aufgebaut ist und ein Öffnungsloch (24) zum Verbinden des ersten Strömungskanalrohrs (15) in einer Seitenwand (13a) desselben aufweist, und
das erste Strömungskanalrohr (15) durch Hartlöten an dem Öffnungsloch (24) befestigt ist,
wobei das Verfahren umfasst:
einen Öffnungslochdurchbohrungsschritt des Stanzens einer Seitenwand (13a) des Ventilhauptkörpers (13) und des Ausbildens des Öffnungslochs (24); und
einen ersten Strömungskanalrohr (15)-Verbindungsschritt des Hartlötens und Befestigens des ersten Strömungskanalrohrs (15), das in das Öffnungsloch (24) eingesetzt ist, an dem Öffnungsloch (24) nach dem Öffnungslochdurchbohrungsschritt, und
wobei der Öffnungslochdurchbohrungsschritt durch Stanzen der Seitenwand (13a) des Ventilhauptkörpers (13) von einer Innenbereichsseite des Ventilhauptkörpers (13) zu einer Außenbereichsseite des Ventilhauptkörpers (13) derart durchgeführt wird, dass eine Durchbiegung (25) in einer Außenbereichsseite des Ventilhauptkörpers (13) ausgebildet ist.

4. Verfahren zum Herstellen des Ventiltriebs nach Anspruch 3, wobei der Ventilhauptkörper (13) eine zylindrische Form aufweist,
wobei das Herstellungsverfahren ferner umfasst:
einen konkaven Abschnittsausbildungsschritt des Ausbildens eines konkaven Abschnitts (28), der in einer Dickenrichtung der Seitenwand (13a) in jedem von einem oberen Abschnitt und einem unteren Abschnitt des Öffnungslochs (24) in der Außenumfangsfläche des Ventilhauptkörpers (13) vertieft ist, vor dem ersten Strömungskanalrohr-Verbindungsschritt, unter der Annahme, dass einer des Ventilhauptkörpers (13) in einer axialen Richtung "oben" ist und der andere des Ventilhauptkörpers (13) in der axialen Richtung "unten" ist, und
wobei der erste Strömungskanalrohr-Verbindungsschritt durch Schmelzen eines ringförmigen Hartlötzusatzmetalls durchgeführt wird, das in dem ersten Strömungskanalrohr (15) derart angeordnet ist, dass es das erste Strömungskanalrohr (15) umgibt und an dem konkaven Abschnitt (28) angebracht ist.

## Revendications

1. Commande de soupape comportant :
un corps principal de soupape (13) qui est pourvu, dans une partie intérieure, d'une chambre de soupape (14) ayant un siège de soupape (23) ;
un corps de soupape (17) qui se déplace vers l'avant et vers l'arrière par rapport au siège de soupape (23) ;
un premier tuyau de canal d'écoulement (15) qui est raccordé au corps principal de soupape (13) de telle manière qu'il communique avec la chambre de soupape (14) ;
un second tuyau de canal d'écoulement (16) qui est raccordé au corps principal de soupape (13) de telle manière à communiquer avec la chambre de soupape (14) ; et
une unité d'entraînement qui entraîne le corps de soupape (17),
dans laquelle le corps principal de soupape (13) est construit par un élément tubulaire, et a un trou d'ouverture (24) pour raccorder le premier tuyau de canal d'écoulement (15) dans une paroi latérale (13a) de celui-ci, et
le premier tuyau de canal d'écoulement (15) est fixé au trou d'ouverture (24) par brasage,
dans laquelle un espace entre une surface périphérique intérieure du trou d'ouverture (24) et une surface périphérique extérieure du premier tuyau de canal d'écoulement (15) est rétréci vers un côté de partie intérieure du corps principal de soupape (13) à partir d'un côté de partie extérieure du corps principal de soupape (13),
**caractérisée en ce que** le trou d'ouverture (24) est un trou qui est formé en poinçonnant la paroi latérale (13a) à partir d'un côté de partie intérieure du corps principal de soupape (13) vers un côté de partie extérieure du corps principal de soupape (13) de telle sorte qu'un affaissement (25) est formé dans un côté de partie extérieure du corps principal de soupape (13).

2. Commande de soupape selon la revendication 1, dans laquelle le corps principal de soupape (13) a une forme cylindrique, et
dans laquelle une partie concave (28) s'enfonçant dans une direction d'épaisseur de la paroi latérale (13a) est formée dans chaque partie parmi une partie supérieure et une partie inférieure du trou d'ouverture (24) dans la surface périphérique extérieure du corps principal de soupape (13), en prenant pour hypothèse qu'une partie du corps principal de soupape (13) dans une direction axiale est "supérieure", et l'autre partie du corps principal de soupape (13) dans la direction axiale est "inférieure".

3. Procédé de fabrication d'une commande de soupape, la commande de soupape comportant :
un corps principal de soupape (13) qui est pourvu, dans une partie intérieure, d'une chambre de soupape (14) ayant un siège de soupape (23) ;
un corps de soupape (17) qui se déplace vers l'avant et vers l'arrière par rapport au siège de soupape (23) ;
un premier tuyau de canal d'écoulement (15) qui est raccordé au corps principal de soupape (13) de telle manière qu'il communique avec la chambre de soupape (14) ;
un second tuyau de canal d'écoulement (16) qui est raccordé au corps principal de soupape (13) de telle manière à communiquer avec la chambre de soupape (14) ; et
une unité d'entraînement qui entraîne le corps de soupape (17),
dans lequel le corps principal de soupape (13) est construit par un élément tubulaire, et a un trou d'ouverture (24) pour raccorder le premier tuyau de canal d'écoulement (15) dans une paroi latérale (13a) de celui-ci, et
le premier tuyau de canal d'écoulement (15) est fixé au trou d'ouverture (24) par brasage,
dans lequel le procédé comporte :
une étape de perçage de trou d'ouverture consistant à poinçonner une paroi latérale (13a) du corps principal de soupape (13) et à former le trou d'ouverture (24) ; et
une étape de raccordement de premier tuyau de canal d'écoulement (15) consistant à braser et fixer le premier tuyau de canal d'écoulement (15) inséré dans le trou d'ouverture (24) sur le trou d'ouverture (24) après l'étape de perçage de trou d'ouverture, et
dans lequel l'étape de perçage de trou d'ouverture est réalisée en poinçonnant la paroi latérale (13a) du corps principal de soupape (13) à partir d'un côté de partie intérieure du corps principal de soupape (13) vers un côté de partie extérieure du corps principal de soupape (13) de telle sorte qu'un affaissement (25) est formé dans un côté de partie extérieure du corps principal de soupape (13).

4. Procédé de fabrication de la commande de soupape selon la revendication 3, dans lequel le corps principal de soupape (13) a une forme cylindrique,
le procédé de fabrication comportant en outre :
une étape de formation de partie concave consistant à former une partie concave (28) s'enfonçant dans une direction d'épaisseur de la paroi latérale (13a) dans chaque partie parmi une partie supérieure et une partie inférieure du trou d'ouverture (24) dans la surface périphérique extérieure du corps principal de soupape (13), avant l'étape de raccordement de premier tuyau de canal d'écoulement, en prenant pour hypothèse qu'une partie du corps principal de soupape (13) dans une direction axiale est "supérieure", et l'autre partie du corps principal de soupape (13) dans la direction axiale est "inférieure", et
dans lequel l'étape de raccordement de premier tuyau de canal d'écoulement est réalisée en faisant fondre un métal d'apport de brasage en forme d'anneau qui est disposé dans le premier tuyau de canal d'écoulement (15) de telle manière à entourer le premier tuyau de canal d'écoulement (15) et à être ajusté à la partie concave (28).
